# EUROPEAN PATENT APPLICATION

(11) **EP 3 961 419 A1**
(43) Date of publication of application: **02.03.2022**
(21) Application number: 20193405.6
(22) Date of filing: 28.08.2020
(51) Int. Cl.: G06F 16/27, G06F 16/182

(54) **COMPUTER-IMPLEMENTED METHOD FOR STORING A DATASET AND COMPUTER NETWORK**

(71) Applicant: Siemens Aktiengesellschaft, 80333 München (DE)
(72) Inventor: Aigner, Tobias, 81543 München (DE); Sauer, Markus, 81739 München (DE); Singh, Saurabh Narayan, 81739 München (DE); Zupan, Nejc, 80337 München (DE)

(57) **Abstract**

In the computer-implemented method for storing a dataset with two or more nodes (SRN, DDN1, DDN2, DDN3, DDN4, DDN5, DDN6) of a computer network (CN), in which the dataset (DS) is split into two or more shards (S1, S2),
characterized in that one shard (S1) is stored with at least two nodes (DDN) redundantly, wherein an integrity of the shard (S1) of one node (DDN2) is subject to a check and wherein, if the check shows a lack of integrity, the shard (S1) is redundantly stored again.

The computer network is configured to carry out this method.

## Description

The invention relates to a method for storing a dataset with two or more nodes of a computer network and to a computer network.

In various technical applications, particularly within the area of the so-called internet-of-things (IoT), datasets are stored in distributed databases across whole computer networks, that comprise a multitude of network nodes.

In such distributed databases, the ownership of data of the database may be decentralized and the dataset maybe replicated across nodes of the network. However, not all data can be replicated over all nodes of the network, since the scalability of such an architecture would be severely limited.

It is general knowledge to split datasets into shards and distribute the shards across different nodes based on a defined algorithm logically and depending on potential failure scenarios. Particularly, nodes in different physical locations or on different operating hardware or nodes owned by different independent legal entities are commonly chosen. With such diverse choices for the nodes, the exposure to single conditions of failure is reduced and the reliability of the storage of the dataset is increased.

The last aspect holds especially true for typical blockchain scenarios where trustless scenarios rely on jointly operated distributed databases. Particularly in such scenarios, consistency and tamperproof operation must be secured through cryptographic measures.

Nevertheless, it is still challenging to ensure data availability of datasets in distributed databases subject to decentralized ownership. In a centralized or distributed system governed by a single entity, this problem can be addressed by existing solutions. In distributed database deployed in a federated environment, in contrast, datasets of the database may be split into shards and distributed across nodes that are not centrally operated. Since certain nodes may become suddenly unavailable and not all the nodes store all shards of the datasets, the availability of data of the database cannot be guaranteed. In case data availability and consistency had to be guaranteed, e.g. for certification proofs, datasets must be recoverable for long time periods.

Thus, the current invention aims at providing an improved method for storing a dataset with nodes of a computer network. Particularly, the method should improve an availability of datasets that are distributed across a computer network consisting of several and not necessarily jointly operated nodes. Furthermore, it is an objective of the current invention to provide an improved computer network.

These objectives of the invention are addressed with a computer-implemented method comprising the features contained in claim 1 and a computer-network comprising the features contained in claim 10. Preferred aspects of the invention are detailed in the dependent claims and the subsequent description.

The computer-implemented method according to the invention is a method for storing a dataset with two or more nodes of a computer network. Preferably, the dataset is a dataset of a distributed database and/or the dataset is stored in a distributed database distributed on or across the two or more nodes of the computer network. In the method, the dataset is split into two or more shards, wherein one shard is stored with at least two nodes redundantly, wherein an integrity of the shard of one node is subject to a check and the shard is redundantly stored again if the check shows a lack of integrity.

It is understood that the phrase "shard stored with a node" means that the shard is stored with a resource that is attributed to the node, such as a storage of the node or a storage associated with the node, such as an external and/or cloud storage attributed to the node, particularly an external and/or cloud storage, whose access is controlled by the node.

Furthermore, it is understood, that the nodes of the computer network are preferably, either indirectly or ideally directly, connected to each other, particularly via internet and/or wirelessly and/or wire based.

It should be noted that although a multitude of shards is involved in the invention, in case the shard is referred to as a single shard it is typically always one and the same shard unless otherwise noted.

The method according to the invention advantageously provides a pro-active health monitoring system which addresses the current issues associated with the state of the art. Particularly the integrity of datasets can be guaranteed for long periods of time via proactive redundant storage of parts of datasets that may be subject to data losses. The method according to the invention utilizes checks of the integrity of shards of datasets and triggers necessary redundant storage of the shards automatically. Accordingly, a persistence and long-term availability of stored datasets can be realized even without a storage of the whole dataset on each node of the computer network.

The method according to the invention does not necessarily involve a storage of the whole dataset in all nodes of the computer network. Thus, the method according to the invention is highly scalable with the size, i.e. the number of nodes, of the computer network.

Advantageously, the additional redundant storage of the shards applies only to those shards, where the redundancy of the shard is in question. Thus, not the full dataset has to be stored redundantly, but only the affected shard of the dataset. Thus, the efforts spent for data transfer and storage can be kept to a minimum.

With the method according to the invention, the availability and consistency of datasets that are decomposed and distributed over multiple nodes can be guaranteed by applying proactive health monitoring and deriving and executing measures to guarantee defined health metrics in a certain range for datasets consisting of distributed shards.

In an advantageous aspect of the method according to the invention, the steps of storing the shard with at least two nodes redundantly, the integrity of the shard being subject to a check and redundantly storing the shard again if the check shows a lack of integrity, are carried out for all shards of the dataset.

Advantageously, in this aspect of the invention the integrity of the full dataset can be guaranteed with a high reliability. Thus, the dataset can be fully and reliably recovered after long periods of time. Thus, the method according to the invention is highly suitable for long-term applications.

In a preferred aspect of the method, the integrity of the shard comprises an identity of the shard and/or a presence of the shard and/or a current status of a storage of the shard.

In this aspect of the invention, the integrity check involves in a first alternative the identity of the shard, meaning that the shard has not been altered in a past time period. Particularly, the identity of the shard may be assessed with calculating a one-way function such as a function resulting in a hash value of the shard and comparing the result of the one-way function with a previously calculated result. In a preferred aspect, the identity may be deduced if the results of the one-way function calculation do not deviate, e.g. if hash values of the shard do not deviate from previously evaluated hash values. In a further aspect of the invention, the integrity of the shard may mean that the shard remains available in a data storage. E.g. in case the shard cannot be retrieved from a data storage, the integrity of the shard may be considered lacking. Additionally, or alternatively, the integrity of the shard may be represented by a current status of a storage of the shard. Particularly if a time span of operation of a storage medium exceeds a certain threshold, the storage medium may be considered as not sufficiently reliable anymore and an additional redundant storage of the shard may be considered necessary. Furthermore, the integrity may refer to a reliability of an external storage provider such as a cloud storage provider. Particularly, the current status of the storage may mean a current backup-routine for backing up data by an external provider, which may change over time and could be treated as not sufficiently reliable in case the backup-routine does not satisfy needs, particularly in terms of redundancy.

According to another advantageous aspect of the method according to the invention, the shard is stored redundantly again with a node, that is different from that node whose shard is subject to the check of integrity.

In this aspect of the invention, single conditions of failure of the respective node, such as misconfigured software or inexperienced operation may be avoided if such conditions contribute to a lack of integrity. Accordingly, a risk of further data loss can be mitigated in this aspect of the invention.

In a preferred aspect of the invention, the integrity is checked using a hash value of the shard. As described above, a hash value of the shard may be used to confirm the identity of the shard with a supposedly identical earlier version of the shard.

In a further advantageous aspect of the invention, the check of the integrity is triggered with a node, that is different from that node whose shard is subject to the check of integrity. In this case, the method according to the invention does not necessarily rely on the functionality of the node whose shard may exhibit a lack of integrity.

In a preferred aspect of the invention, the shard is redundantly stored again with a node different from that node that triggered the check of the integrity. In this aspect, the functional roles of the nodes for the method according to the invention are played by different nodes, so that possible issues present on one node do not interfere with carrying out method steps on other nodes.

In a further preferred aspect of the invention, one of, particularly more and ideally each of, the shards are stored with a true subset of the nodes. In this aspect of the invention, not every node needs to store the full dataset in its entirety. Thus, the application of the method according to the invention remains scalable since storage requirements do not necessarily grow extensively with an increase of the number of nodes of the computer network.

Preferably, the subsets are different pairwise. In this aspect of the invention, a certain diversity of nodes storing the shards is guaranteed. Thus, the method may be less vulnerable to certain risks particularly associated with a subset of the nodes of the computer network.

The computer network according to the invention is configured to carry out the method according to the invention described above. E.g. the computer network may comprise a data storing registry, that stores an ID of the shards and/or a hash value of the shard and/or the node or nodes, the shard is stored with and/or communication signals for agreeing on the storage of the respective shard. Alternatively, or in addition, the nodes, that store shards of the dataset, may comprise shard storage modules for storing the shards and/or shard monitoring and checking modules for monitoring and checking the integrity of the shards and/or shard recovery modules for recovering the shards.

Alternatively, or in addition, nodes that request storage of shards may comprise a data to shards module that decomposes a dataset into shards and/or a shard distribution and management module that determines the distribution and management of shards to other nodes of the computer network.

Preferably, all previously mentioned modules such as the data storing registry and/or the shard storing module/s and/or the shard monitoring and checking module/s and/or the shard recovery module/s and/or the data to shards module/s and/or the shard distribution and management module/s may be realized as software modules configured to carry out the tasks mentioned above.

Optionally and advantageously, the computer network may be a communication network.

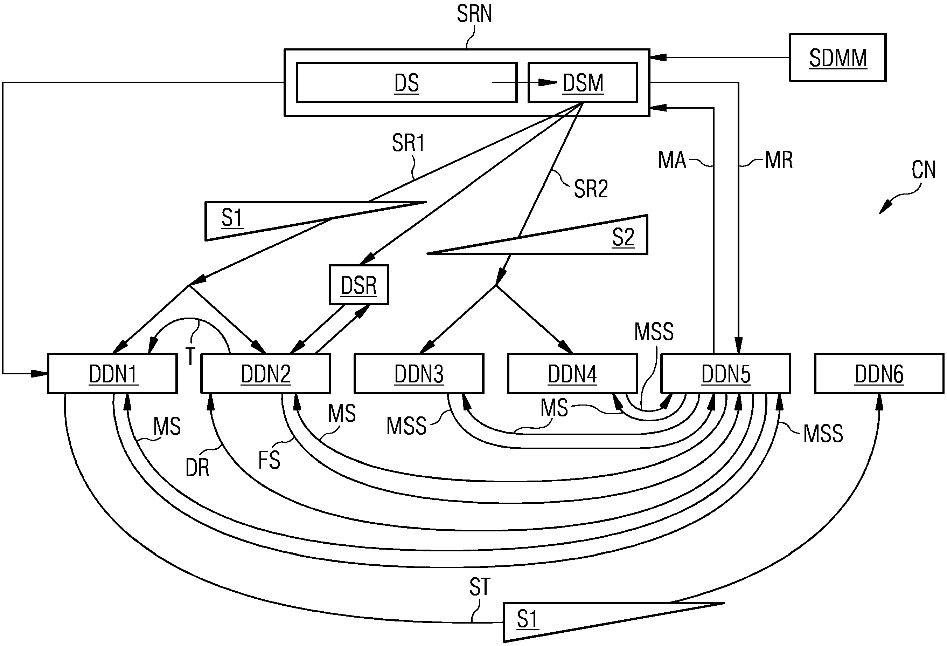

In the following, preferred embodiments of the inventions shown in the drawings will be explained in more detail. Figure 1 shows a computer network according to the invention, which is configured to carry out the method according to the invention.

The computer network CN according to the invention shown in figure 1 is a communication network and comprises a multitude of connected nodes SRN, DDN1, DDN2, DDN3, DDN4, DDN5, DDN6, which are each realized as individual computers that operate a software to carry out the method according to the invention.

One node SRN of the nodes SRN, DDN1, DDN2, DDN3, DDN4, DDN5, DDN6 of the computer network CN is faced with the task of storing a dataset DS in a database utilizing the nodes DDN1, DDN2, DDN3, DDN4, DDN5, DDN6 of the computer network CN. This means, the nodes DDN1, DDN2, DDN3, DDN4, DDN5, DDN6 of the computer network CN are requested to provide the storage resources for storing the dataset DS. The node SRN requesting storage for the dataset DS is referred to as a storage requesting node SRN in what follows.

In a first step, the storage requesting node SRN sets up a splitting of the dataset DS into shards. In order to split the dataset DS, the storage requesting node SRN requests particular instructions in form of a sharding algorithm, which are centrally stored in the computer network CN in a shard distribution and management module SDMM, which is realized as a software module running for instance on a separate server In other embodiments, the shard distribution and management module may run on a node or may be distributed across more or all nodes, so that the shard distribution and management module runs in a decentralized fashion. The shard distribution and management module SDMM additionally transmits a set of parameters for the sharding algorithm that comprise additional conditions for sharding, namely how many times the shard should be stored redundantly on different nodes, how many nodes will monitor an integrity of the shards and a minimum shard size, how shards should be distributed across the computer network and optionally a level of intended hardware difference between storage nodes DDN1, DDN2, DDN3, DDN4, DDN5, DDN6.

The storage requesting node SRN splits the dataset DS of the database into shards according to the algorithm received by the shard distribution and management module SDMM. The storage requesting node SRN comprises a data-to-shards-module DSM, which is realized as a software module running on the storage requesting node SRN. The data-to-shards-module DSM performs the splitting of the dataset DS. In the embodiment depicted in figure 1, the dataset DS is split into two shards, a first shard S1 and a second shard S2, for reasons of illustration. In reality, the number of shards is typically of the same order of magnitude as the number of nodes SRN, DDN1, DDN2, DDN3, DDN4, DDN5, DDN6 of the computer network CN, but truly lower than this number, so that only a true subset of nodes SRN, DDN1, DDN2, DDN3, DDN4, DDN5, DDN6 stores shards of the dataset DS.

Within the algorithm provided by the shard distribution and management module SDMM the storage requesting node SRN received instructions for the distribution of the first shard S1 and the second shard S2. The storage requesting node SRN distributes the first S1 and second shard S2 according to these instructions.

The nodes DDN1, DDN2 receive storage requests SR1 for the first shard S1 and the nodes DDN3, DDN4 receive storage requests SR2 for the second shard S2, respectively.

Each node DDN1, DDN2, DDN3, DDN4 stores the respective first S1 or second shard S2 and returns an acknowledgment signal (including a hash signed with a private key of the Nodes DDN) or rejects the request. The acknowledgement signals are not explicitly shown in figure 1.

The acknowledgement signals by each node DDN1, DDN2, DDN3, DDN4 and addresses of the storing Nodes DDN1, DDN2, DDN3, DDN4 for the first S1 and second shards S2 of the dataset DS are stored in a data storing registry DSR in order to easily retrieve the dataset DS again for rebuilding the dataset DS from the first S1 and second shard S2. The data storing registry DSR can for instance be realized in central fashion but also as distributed system across multiple systems.

For each acknowledgment of a stored first S1 or second shard S2, storage requesting node SRN sends out monitoring requests that contain a shard ID of the shard, signed hashes of the shard storage acknowledgements and an address of the storage locations. In the depicted embodiment of a computer network CN in form of a communication network, the addresses of the shards are represented as communication addresses. In the situation depicted in figure 1, a monitoring request MR is sent out to the node DDN5, which does not store the first S1 and the second shard S2. The monitoring request MR requests monitoring the storage of the first S1 and second shard S2 on the nodes DDN1, DDN2, DDN3, DDN4.

DDN5 responds to the monitoring request MR with an acknowledgment signal MA and starts monitoring the storage of the first S1 and second shard S2 on the nodes DDN1, DDN2, DDN3, DDN4.

In order to monitor the storage of the first S1 and second shard S2 on the nodes DDN1, DDN2, DDN3, DDN4, the node DDN5 sends out a monitoring signal MS with a shard ID of the respective first S1 or second shard S2 and a hash of the respective first S1 or second shard S2 to the respective nodes DDN1, DDN2, DDN3, DDN4.

The nodes DDN1, DDN2, DDN3, DDN4 look up the first S1 or second shard S2, respectively, in their respective storage and calculate the hash of the respective first S1 or second shard S2 and compare the hash with the hash contained in the monitoring signal MS.

If the calculated hash and the hash in the monitoring signal MS match, the storing nodes DDN1, DDN3, DDN4 send back a confirmation signal MSS to the monitoring node DDN5, that indicates that an integrity of the stored first S1 or second shard S2, respectively, is confirmed. In these cases, the monitoring node DDN5 continues with its monitoring according to defined policies.

In case the calculated hash and the hash in the monitoring signal MS do not match, which in the depicted embodiment is exemplarily shown for the node DDN2 in figure 1, the node DDN2 sends back a failure signal FS that indicates a lack of integrity of the stored first shard S1.

Accordingly, the monitoring node DDN5 sends out a replication request DR to the storing node DDN2. The storing node DDN2 comprises a shard recovery module (not explicitly shown in figure 1) for recovering the first shard S1. The shard recovery module of the storing node DDN2 is preferably realized with a software module.

If the storing node DDN2 receives the replication request DR for its stored first shard S1, its shard recovery module SRM of the storing node DDN2 checks (in the embodiment depicted in figure 1 via consultation of the data storing registry DSR) which other storing node DDN1 stores a copy of this shard and which other node DDN6 are available.

The shard recovery module of the storing node DDN2 generates a new storage request to other node DDN6 not being involved in storage or monitoring of the corresponding dataset DS and requests storing node DDN1 with a triggering signal T to send a copy of the first shard S1 stored by storing node DDN1 to the other node DDN6 with a shard transfer signal ST.

On receiving a positive shard storage acknowledgement signal, the shard recovery module of storing node DDN2 validates that all storage and monitoring policies for this shard are now fully met again and synchronizes this information with the monitoring node DDN5. If this is the case, phase 2 continues. Otherwise, shard recovery continuous.

In another embodiment, the data storing registry DSR used for storing acknowledgment messages and addresses of the storing Node DDN1, DDN2, DDN3, DDN4, DDN6 storing shards can be implemented as a distributed, decentralized database.

## Claims

1. Computer-implemented method for storing a dataset (DS) with two or more nodes (SRN, DDN1, DDN2, DDN3, DDN4, DDN5, DDN6) of a computer network (CN), in which the dataset (DS) is split into two or more shards (S1, S2),
**characterized in that**
at least one shard (S1) is stored with at least two nodes (DDN1, DDN2) redundantly, wherein an integrity of the shard (S1) of one node (DDN2) is subject to a check and wherein, if the check shows a lack of integrity, the shard (S1) is redundantly stored again.

2. Method according to claim 1, whose steps of the characterizing part are carried out for more than one, preferably for each, shard (S1, S2) of the dataset (DS).

3. Method according to one of the preceding claims, wherein the integrity of the shard (S1) comprises an identity of the shard (D1) and/or a presence of the shard (S1) and/or a current status of a storage of the shard (S1).

4. Method according to one of the preceding claims, wherein the shard (S1) is stored redundantly again with a node (DDN6), that is different from that node (DDN2) that currently stores the shard (S1) whose integrity of the shard (S1) is checked.

5. Method according to one of the preceding claims, wherein the integrity is checked using a hash value of the shard (S1) .

6. Method according to one of the preceding claims, wherein the check of the integrity is triggered with a node (DDN5), that is different from that node (DDN2) that stores the shard (S1) whose integrity is checked.

7. Method according to one of the preceding claims, wherein the check of the integrity is checked by a node (DDN5) and wherein the shard (S1) is redundantly stored again with a node (DDN6) different from that node (DDN5) that triggers the check of the integrity.

8. Method according to one of the preceding claims, wherein one of, preferably more, ideally each of, the shards (S1) are stored with a true subset of the nodes (DDN1, DDN2) .

9. Method according to one of the preceding claims, wherein the subsets are different pairwise.

10. Computer-network configured to carry out the method according to one of the preceding claims.
